# FASCICULE DE BREVET EUROPEEN

(11) **EP 0 657 672 B1**
(45) Date de publication et mention de la délivrance du brevet: **16.10.1996**
(21) Numéro de dépôt: 94402809.1
(22) Date de dépôt: 07.12.1994
(51) Int. Cl.: F16L 3/22

(54) **Dispositif de raccordement bout à bout de tronçons de chemins de câbles perforés**
Vorrichtung für die Stossverbindung von perforierten Abschnitten eines Kabelkanals
Device for butt joining perforated parts of a cable trunking

(30) Priorité: 10.12.1993 FR 9314852
(43) Date de publication de la demande: 14.06.1995
(73) Titulaire: LEGRAND, F-87045 Limoges Cédex (FR); LEGRAND SNC, F-87045 Limoges (FR)
(72) Inventeur: Decore, Bertrand, F-72650 La Chapelle Saint Aubin (FR); Jadaud, Alain, F-72140 Tennie (FR)
(74) Mandataire: CABINET BONNET-THIRION

(56) Documents cités:
- DE-C- 1 540 323
- GB-A- 1 359 150

## Description

La présente invention se rapporte aux chemins de câbles constitués par assemblage bout à bout de tronçons successifs de profilés de section de forme générale en canal et comportant des lignes de perforations régulièrement réparties tant dans la paroi de fond que dans les parois latérales. Quels que soient la nature du matériau (métal, plastique, composite....) et le procédé de fabrication (pliage et/ou emboutissage, moulage, extrusion, pultrusion.....), les tronçons ou éléments de chemin de câbles sont toujours disponibles en longueurs unitaires prédéterminées. Le raccordement bout à bout des tronçons s'opère couramment au moyen d'éclisses présentant en regard d'une ligne de perforations un alignement d'anses adaptées à s'engager dans au moins deux perforations de chacun des tronçons à réunir assemblés et un peigne de verrouillage assurant l'assemblage par emboîtement avec coincement de ses dents dans les anses ainsi engagées.

Or, la réalisation d'un parcours en chemin de câbles nécessite, en fonction de l'installation, de découper des tronçons de longueur variable de sorte que l'on modifie en général la position de l'extrémité de tronçons par rapport aux perforations.

En conséquence, pour retrouver le pas de perforation avec une éclisse à peigne classique, il est nécessaire de laisser un espace entre tronçons voisins, ce qui présente l'inconvénient de rompre la continuité souhaitable de chemin de câbles.

L'invention a pour objet d'éviter cet inconvénient grâce à un moyen de rattrapage du pas.

L'invention offre à cet effet un dispositif de raccordement du type ci-dessus évoqué à éclisse avec anses et peigne de verrouillage, essentiellement caractérisé par l'aménagement au sein de l'éclisse d'un moyen de réglage de la position des anses.

Un tel aménagement permet de rattraper le pas des perforations indépendamment de la position de l'extrémité adjacente du tronçon.

Le moyen de réglage en question pourra avantageusement comporter une éclisse présentant de part et d'autre d'une zone centrale une fente continue s'étendant en regard d'une ligne de perforations et un loquet associé à chacune de ces fentes avec au moins deux anses en saillie et apte à coulisser dans la fente.

Grâce à cette disposition, le raccordement bout à bout et sans jeu de deux tronçons de chemin de câbles devient possible grâce à la possibilité de déplacement de chaque loquet dans sa fente de manière à amener les anses en regard des perforations correspondantes, quelle que soit la position de l'extrémité adjacente du tronçon par rapport aux colonnes de perforations.

Selon une forme avantageuse de réalisation de l'invention particulièrement adaptée à la fabrication par moulage des éléments du dispositif, les fentes ménagées de part et d'autre du milieu de l'éclisse constituent une fenêtre allongée au fond d'une embrasure ménagée dans l'épaisseur du montant d'une éclisse en équerre.

Une platine de façade de chaque loquet étant adaptée à s'emboîter dans l'embrasure d'une fenêtre correspondante, il en résulte un assemblage particulièrement compact et efficace.

Selon un autre développement avantageux de l'invention des rugosités complémentaires sont ménagées en fond d'embrasure d'une part et sur la face interne des platines du loquet d'autre part, cette disposition offrant l'avantage d'assurer, après mise en place du peigne de verrouillage, un blocage du réglage en translation des loquets et une solidarisation de l'ensemble.

Les peignes de verrouillage mis en oeuvre dans le dispositif selon l'invention sont munis d'un capot, cette disposition offrant de multiples avantages. Le capotage du peigne constitue d'abord une protection contre le risque de déverrouillage par un détachement ou arrachement involontaire du peigne. Il constitue un moyen précieux de renforcement de la robustesse du dispositif tout en améliorant l'aspect esthétique de l'ensemble du chemin de câbles.

Un avantage important du dispositif de l'invention est de pouvoir être monté sans outil.

Les caractéristiques et avantages de l'invention ressortiront d'ailleurs de la description qui va suivre, à titre d'exemple, en référence aux dessins annexés dans lesquels:
la figure 1 est une vue en perspective de deux tronçons de chemin de câbles mis bout à bout pour assemblage selon l'invention ;
la figure 2 est une vue à plus grande échelle montrant une éclisse, un loquet et un peigne ;
la figure 3 est une vue du dessus d'un dispositif assemblé en coupe au niveau III-III de la figure 2 ;
la figure 4 est une vue en coupe transversale selon le plan IV-IV de la figure 3 avant mise en place du peigne ;
la figure 5 est une vue semblable à la précédente, le peigne étant en place ;
la figure 6 est une vue en coupe selon le plan VI-VI de la figure 3 ;
les figures 7 à 9 sont des vues schématiques en perspective de réalisations articulées du dispositif pour les cas respectivement de changement de direction, de bifurcation et de changement de plan.

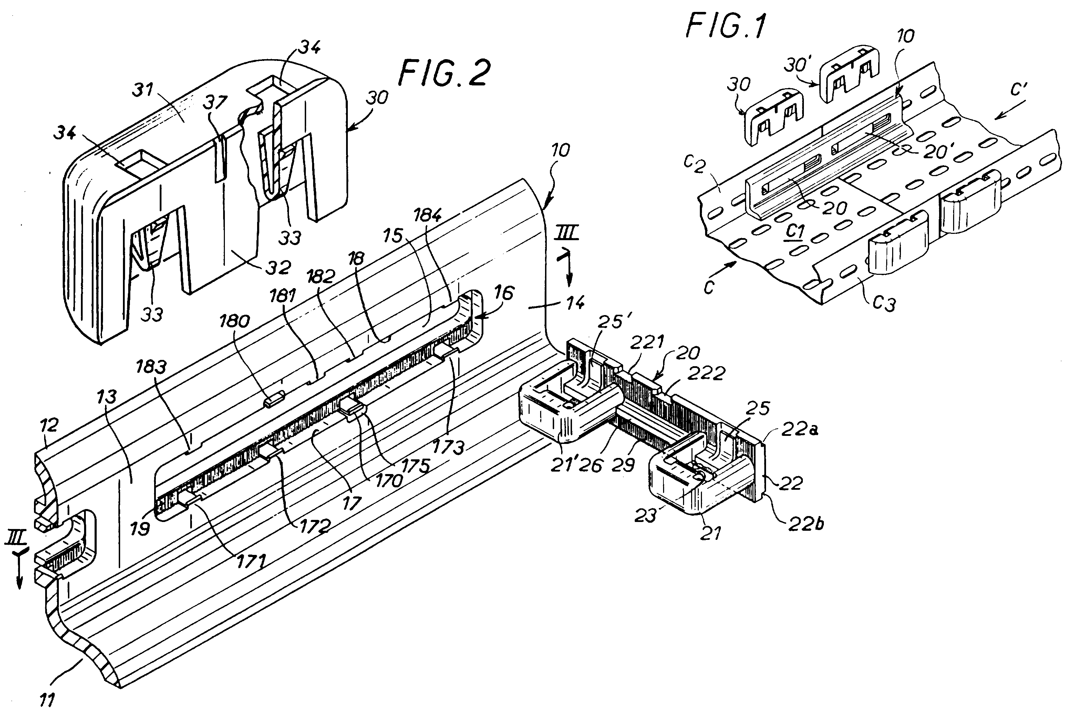

Dans la forme de réalisation décrite et représentée (Fig 1) deux tronçons de chemin de câbles C et C' sont assemblés bout à bout par deux dispositifs selon l'invention comprenant chacun une éclisse 10, deux loquets 20 et deux peignes 30. Chaque chemin de câbles comprend de façon classique un profilé en canal avec une paroi de fond C1 entre deux parois latérales C2 et C3, chacune de ces parois présentant des perforations alignées en trois lignes sur le fond C1 et une ligne unique sur chacune des parois latérales C2 et C3.

Comme on le voit sur la figure 1, par rapport au plan de jonction entre deux tronçons C et C' mis bout à bout, la position des perforations s'avère aléatoire en raison de la coupe des longueurs : ainsi dans l'exemple considéré la coupe du tronçon C' traverse une colonne de perforations alors que normalement l'extrémité d'un tronçon, comme celle du tronçon C passe au milieu de l'intervalle entre deux colonnes de perforations.

Dans le cas de l'exemple considéré, il s'agit de chemin de câbles extrudé en matière plastique avec des perforations allongées d'une longueur de 25 mm se succédant dans chaque ligne à un pas de 50 mm.

L'éclisse 10 présente un profil en équerre adapté à s'emboîter dans l'angle formé entre le fond C1 et un côté C2 ou C3 du chemin de câbles avec une aile d'embase 11 et une aile latérale 12, cette dernière présentant, entre une zone centrale 13 et chacune des deux zones d'extrémité 14, une fenêtre 15 s'étendant en regard de la ligne de perforations du côté C2 ou C3 du chemin de câbles. Chacune des fenêtres s'étend en longueur sur environ 2,5 pas de perforations tandis que sa dimension en hauteur correspond sensiblement à la dimension transversale des perforations.

En arrière de chaque fenêtre 15 est ménagée une embrasure 16 présentant sur ses rebords inférieur 17 et supérieur 18 des dents saillantes de retenue et de guidage : on note ainsi le long du rebord inférieur 17 trois dents rigides 171, 172, 173 et une dent souple 170 formant crochet flexible car ménagée en bout d'une languette élastique à l'aplomb d'une encoche 175 de dégagement. On note de même le long du rebord supérieur 18, à côté d'une dent souple 180 formant crochet flexible, une paire de dents rapprochées 181, 182 ainsi que deux dents latérales 183, 184 respectivement alignées avec les dents inférieures 171, 173.

Enfin la paroi de fond de l'embrasure 16 présente une fine denture 19 s'étendant de part et d'autre de la fenêtre 15 selon toute la longueur de celle-ci.

Le loquet 20 selon l'invention présente de son côté deux anses 21, 21' adaptées à s'emboîter dans deux perforations adjacentes d'une ligne de perforations du chemin de câbles, ces anses comportant deux branches parallèles en saillie sur la platine 22 et une traverse portant sur sa face interne une lame inclinée 23.

La platine 22 destinée à se placer dans l'embrasure 16 présente une épaisseur correspondant à la profondeur de cette embrasure avec des feuillures 22a, 22b ménagées selon ces bords supérieur et inférieur pour permettre un coulissement sur les dents de guidage inférieures et supérieures.

La platine 22 du loquet présente aussi à l'un de ses bords deux encoches telles que visibles en 221 et 222 sur la figure 2 et au moins une autre encoche semblable dans son bord opposé en une position décalée par rapport aux précédentes.

Plus précisément, en référence à la figure 2, l'encoche 221 est située en regard de la branche interne de l'anse 21' et une encoche semblable est ménagée dans le bord opposé en regard de la branche interne de l'anse 21.

Enfin dans sa face interne portant une denture 29 complémentaire de la fine denture 19 de l'embrasure de l'éclisse, la platine comporte en regard de chaque anse 21, 21' une lamelle souple 25, 25' à la faveur d'un évidement correspondant et ceci de part et d'autre d'une nervure centrale 26 qui s'étend sur toute la longueur du loquet.

Le troisième composant du dispositif est enfin le peigne 30 qui présente entre un capot 31 et une paroi dorsale 32 une paire de dents 33, 33'. Chacune de ces dents présente en regard d'une ouverture 34, 34' et d'un large dégagement de la paroi dorsale, une partie descendante alignée avec ladite paroi dorsale et une partie montante formant un angle aigu avec la précédente et allant en s'évasant. A la racine de la partie descendante de la dent est ménagé, en saillie à l'extérieur du peigne, un cran 36 d'accrochage destiné à coopérer avec la perforation.

Il est ménagé enfin au milieu du bord supérieur de la face dorsale du peigne un dégagement 37 en forme de coin pour le passage d'un outil (tournevis ou analogue) pour le démontage éventuel.

On va considérer maintenant le fonctionnement du dispositif ainsi constitué.

On a déjà noté en référence à la figure 1 que l'assemblage de deux tronçons de chemin de câbles C et C' s'opère normalement par l'application d'un dispositif de liaison selon chacun des côtés du chemin de câbles en cours de constitution.

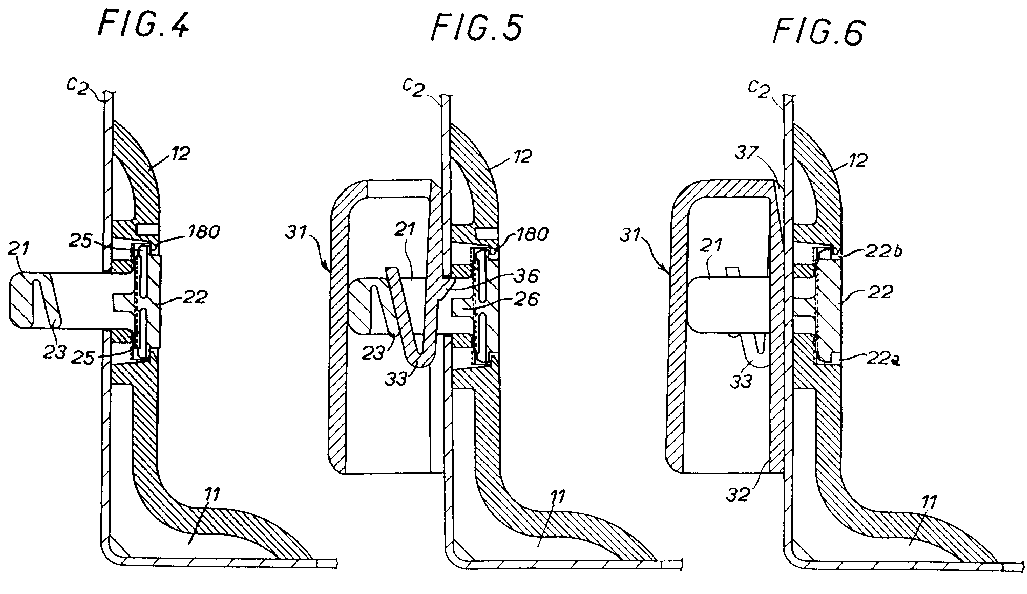

Dans le dispositif tel que mis à la disposition de l'usager, les deux loquets seront avantageusement prémontés sur chaque éclisse par la mise en place d'un loquet dans chacune des deux fenêtres de l'éclisse. Cette mise en place s'effectue par présentation du loquet 20 (figure 2) en regard de l'embrasure 16 de la fenêtre 15 de sorte que les deux encoches 221, 222 de son bord supérieur viennent respectivement en face des dents 181, 182 du bord supérieur de l'embrasure, tandis que l'encoche (non visible) du bord inférieur de la platine 22 du loquet se présente en regard de la dent 172 du bord inférieur de l'embrasure. Le loquet s'emboîte ainsi dans une position relative pré-définie avec déformation élastique des deux crochets flexibles 170 et 180 et les deux anses 21, 21' viennent en saillie sur la face dorsale de l'aile 12 de l'éclisse comme illustré figure 4. Dès lors le loquet peut coulisser librement dans la fenêtre 15, tandis que les lamelles élastiques 25 glissent avec un léger frottement sur la denture 19 de la paroi du fond de l'embrasure. Les dents de butée 171-173 et 181-184 assurent le guidage de la platine 22 dont la face externe se trouve légèrement en saillie sur la façade interne du montant de l'éclisse; c'est la position illustrée à la Figure 4.

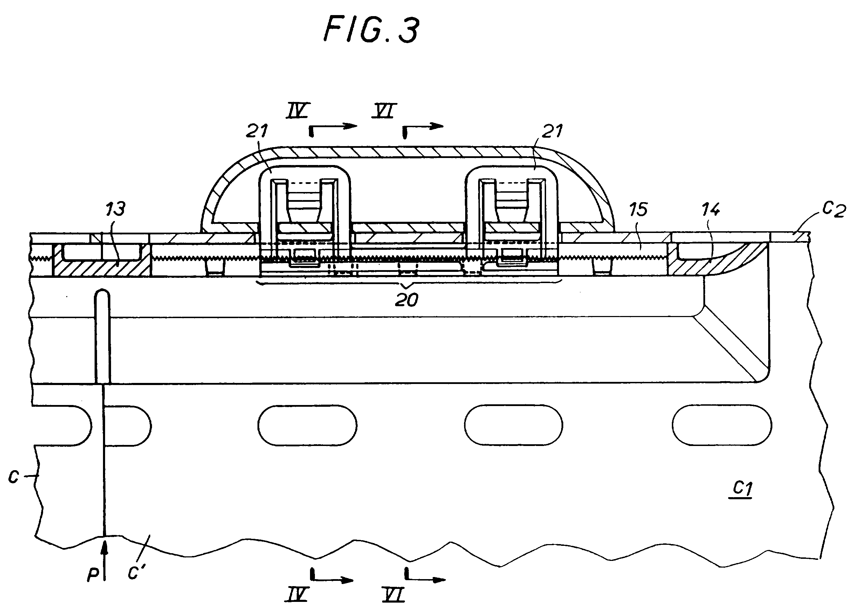

Pour la mise en place de l'éclisse ainsi équipée d'un loquet de part et d'autre de la zone centrale 13 (Figure 3) on place cette zone centrale 13 à cheval sur le plan de joint P des deux tronçons de chemin de câbles C et C' et l'on déplace chacun des deux loquets 20, dans sa fenêtre 15 correspondante, jusqu'à ce que ses deux anses 21, 21' se placent en regard de deux perforations voisines. Cette position une fois trouvée pour chacun des deux loquets, on repousse l'éclisse au contact des montants C2 alignés en engageant ainsi chacune des anses 21 dans une perforation correspondante ; c'est la position illustrée à la Figure 4.

Il suffit alors d'engager un peigne 30 dans les deux anses 21 de chaque loquet. L'engagement du peigne dans les anses est facilité par la conformation effilée de haut en bas des dents 33 dans les deux directions longitudinale et transversale. Cet engagement est également facilité par le double effet de chanfrein résultant de l'inclinaison de la lame 23 du loquet d'un côté et de l'inclinaison de la partie montante de la dent 33 de l'autre. On obtient ainsi la position définitive de blocage illustrée aux figures 5 et 6 : le mouvement de descente du peigne assure, par engagement à force de la dent de peigne 33 sur la lame inclinée 23 de l'anse, une déformation élastique de la lame 23 et de la dent 33 qui plaque la platine 22 du loquet contre le fond de l'embrasure avec engagement mutuel des dentures complémentaires 19 et 29 : il en résulte simultanément un verrouillage de l'éclisse et un blocage en translation du loquet entraînant une parfaite solidarisation de l'ensemble formé désormais avec les deux tronçons de chemin de câbles C et C'; cette situation correspondant à l'état illustré en particulier par les figures 5 et 6.

Il convient de souligner que l'élasticité des moyens coopérants de l'assemblage, lame flexible 23 et/ou dent 33, permet au dispositif de s'adapter aux variations éventuelles d'épaisseur de la paroi C2 qu'il s'agisse de variations attribuables au processus de fabrication ou encore de la configuration des tronçons.

Pour un démontage éventuel, il suffit d'engager un outil du genre tourne-vis ou analogue dans le dégagement 37 de la face dorsale du peigne pour, en faisant levier avec appui sur la paroi C2 du chemin de câbles, libérer les crans 36 de leur accrochage sous la nervure 26 du loquet à l'encontre de la force de rappel exercée par déformation élastique des lames 23 et de la branche montante des dents 33. Après enlèvement du peigne ainsi libéré, on retrouve la position de la Figure 4 et l'éclisse se démonte sans problème avec les deux loquets.

L'invention n'est bien entendu pas limitée aux détails de la forme de réalisation qui vient d'être décrite à titre d'exemple illustratif. Ainsi, notamment, une simplification peut être envisagée par la suppression des lamelles 25, 25' du loquet dont le rôle se limite à une amélioration des conditions de guidage du loquet au cours de ses mouvements de recherche d'une position adéquate en maintenant les dentures 19 et 29 écartées dans l'attente de leur engrènement et blocage par le peigne. Une autre possibilité de simplification peut consister à renoncer à la double action élastique résultant de la coopération de chaque lame 23 d'une anse avec une dent 33 du type considéré : on peut supprimer par exemple la lame élastique 23 en se contentant de l'élasticité de la seule dent 33 ou inversement, faire coopérer une dent de peigne rigide avec une lame élastique 23.

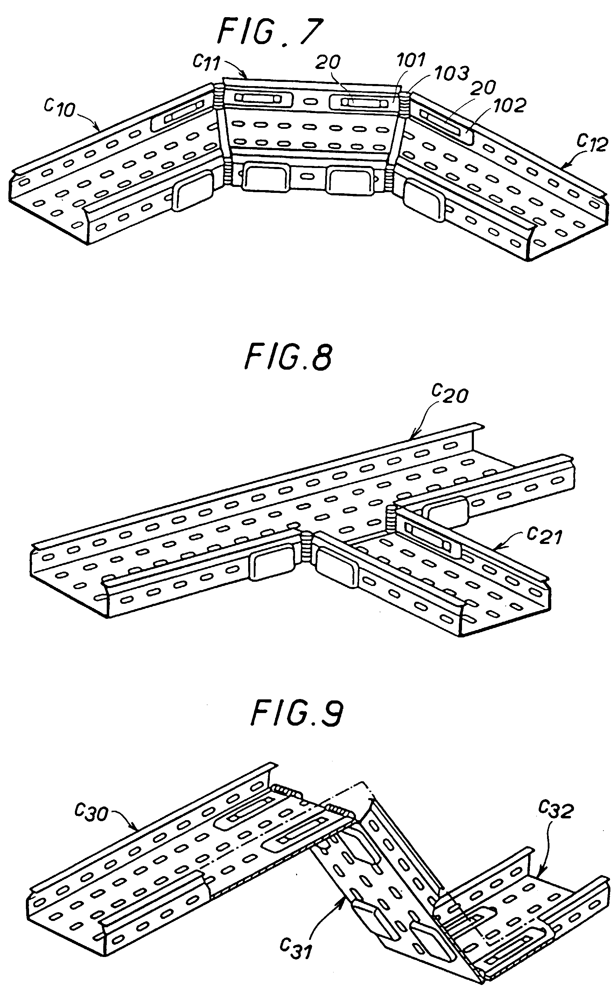

Les figures 7 à 9 montrent d'autres variantes de réalisation présentant en commun la particularité d'une articulation de l'éclisse dans sa zone centrale.

Ainsi dans le cas de la figure 7 deux tronçons de chemin de câbles C10 et C12 orientés perpendiculairement l'un à l'autre sont réunis entre eux par un tronçon intermédiaire C11, les coupes des extrémités adjacentes étant effectuées à 45° à chacune des deux jonctions bout à bout. A cheval sur chacune des jonctions et selon chacun des deux côtés de la structure on trouve un dispositif de raccordement comportant deux demi-éclisses 101, 102 de part et d'autre d'une charnière d'articulation 103, avec dans chacune d'elles un loquet 20, adapté à coopérer comme précédemment avec une ligne de perforations et à être verrouillé par un peigne 30.

Dans le cas de la figure 8 une bifurcation C21 est ménagée à partir d'un tronçon de chemin de câbles C20 à la faveur d'une ouverture découpée à cet effet dans l'un des côtés de celui-ci. On reconnaît ici encore des deux côtés de la bifurcation un dispositif articulé en tout point semblable au dispositif illustré à la figure 7.

A la figure 9, enfin des dispositifs encore semblables se retrouvent posés cette fois selon le fond des tronçons C30, C31, C32 réalisant un changement de niveau dans le sens vertical par l'assemblage bout à bout du tronçon C31 incliné à 45° par exemple entre deux tronçons horizontaux C30, C32.

Dans tous ces cas de figures, les éclisses pourront avantageusement présenter un profil globalement plat au lieu du profil à équerre des formes de réalisations précédemment considérées.

Il n'est pas non plus impératif que le nombre d'anses ménagées sur chaque loquet soit égal à deux et que ces anses soit alignées : rien n'empêche d'envisager notamment des dispositifs d'assemblage conçus selon l'invention pour coopérer avec deux ou davantage de lignes de perforations et de comporter à cet effet des loquets portant une multiple pluralité d'anses en des alignements correspondant sur une platine commune.

## Revendications

1. Dispositif de raccordement bout à bout de tronçons de chemin de câbles (c et c') du genre comportant une éclisse (10) portant en regard d'au moins une ligne de perforations desdits tronçons un alignement d'anses (21, 21') saillantes adaptées à s'engager dans au moins deux perforations de chaque tronçon et un peigne de verrouillage (30) de l'éclisse par emboîtement de dents (33, 33') dans les anses ainsi engagées, caractérisé par l'existence au sein de l'éclisse de moyens de réglage de la position des anses.

2. Dispositif selon la revendication 1, caractérisé en ce que les moyens de réglage comportent:
- une éclisse (10) présentant de part et d'autre d'une zone centrale (13) une fente continue (15) s'étendant en regard d'une ligne de perforations, et
- au moins un loquet (20) associé à chacune de ces fentes avec au moins deux anses (21) en saillie et apte à coulisser dans cette fente.

3. Dispositif selon la revendication 2, caractérisé en ce que la fente continue (15) constitue une fenêtre allongée au fond d'une embrasure (16) ménagée dans l'épaisseur du montant (12) d'une éclisse.

4. Dispositif selon la revendication 3, caractérisé en ce qu'une platine (22) de façade de chaque loquet est adaptée à s'emboîter et à coulisser dans l'embrasure (10) d'une fenêtre (15) correspondante.

5. Dispositif selon la revendication 3 ou 4, caractérisé en ce que des dents de retenue et de guidage (171-173, 181-184) sont ménagées le long des bords inférieur (17) et supérieur (18) de l'embrasure.

6. Dispositif selon la revendication 5, caractérisé en ce qu'il est prévu en outre un crochet flexible (170, 180) dans une partie médiane de chacun des bords d'embrasures (17, 18).

7. Dispositif selon la revendication 1, caractérisé par l'existence de moyens de blocage du réglage de la position des anses.

8. Dispositif selon la revendication 7, caractérisé en ce que les moyens de blocage sont adaptés à être actionnés par le peigne de verrouillage.

9. Dispositif selon la revendication 8, caractérisé en ce que les moyens de blocage comportent des dentures complémentaires (19, 29) ménagées au fond de l'embrasure et sur la face interne de la platine du loquet.

10. Dispositif selon l'une quelconque des revendications précédentes, caractérisé en ce que le peigne comporte un capot.

11. Dispositif selon l'une quelconque des revendications 2 à 10, caractérisé en ce que le peigne associé à chaque loquet comporte un nombre de dents correspondant au nombre d'anses de ce loquet.

12. Dispositif selon l'une quelconque des revendications précédentes, caractérisé par un moyen de verrouillage du peigne adapté à intervenir lorsque les dents du peigne sont engagées dans les anses.

13. Dispositif selon la revendication 12, caractérisé en ce que le moyen de verrouillage du peigne comporte un cran d'accrochage (36) destiné à coopérer avec la perforation.

14. Dispositif selon la revendication 13, caractérisé par un dégagement en forme de coin (37) de la paroi dorsale du peigne.

15. Dispositif selon la revendication 9, caractérisé en ce que la platine du loquet est équipée en outre de lamelles de guidage (25) en regard de chaque anse.

16. Dispositif selon la revendication 5 et 4, caractérisé en ce que des feuillures (22a, 22b) sont ménagées selon les bords supérieur et inférieur de la platine du loquet.

17. Dispositif selon l'une quelconque des revendications précédentes, caractérisé en ce que l'éclisse a un profil en équerre.

18. Dispositif selon une quelconque de revendications 1 à 16, caractérisé en ce que l'éclisse a un profil globalement plat.

19. Dispositif selon une quelconque des revendications précédentes, caractérisé par l'aménagement dans la zone centrale de l'éclisse d'un moyen d'articulation (103).

20. Dispositif selon une quelconque des revendications 2 à 19, caractérisé par un loquet équipé d'anses alignées en regard de plusieurs lignes de perforations du chemin de câbles.

## Patentansprüche

1. Vorrichtung zur Stoßverbindung von Teilstücken von Kabelkanälen (C und C') der Sorte, die eine Lasche (10), die gegenüber von wenigstens einer Perforationslinie der Teilstücke eine Reihe von vorspringenden Klammern (21, 21') trägt, die ausgelegt sind, in wenigstens zwei Perforationen von jedem Teilstück einzugreifen, und einen Verriegelungskamm (30) der Lasche durch Aufnehmen von Spitzen (33, 33') in den bereits in Eingriff stehenden Klammern umfaßt,
gekennzeichnet durch das Vorhandensein von Regelungsmitteln der Klammerposition im Inneren der Lasche.

2. Vorrichtung nach Anspruch 1,
dadurch gekennzeichnet,
daß die Regelungsmittel
eine Lasche (10), die beiderseits eines zentralen Bereichs (13) einen kontinuierlichen Schlitz (15) aufweist, der sich gegenüber einer Perforationslinie erstreckt, und
wenigstens einen Riegel (20) umfassen, der jedem dieser Schlitze zugeordnet ist, mit wenigstens zwei vorspringenden Klammern (21) und der fähig ist, sich in diesem Schlitz hin- und herzubewegen.

3. Vorrichtung nach Anspruch 2,
dadurch gekennzeichnet,
daß der kontinuierliche Schlitz (15) ein längliches Fenster an der Unterseite einer Fensteröffnung (16) bildet, die in der Dicke der Stütze (12) einer Lasche vorgesehen ist.

4. Vorrichtung nach Anspruch 3,
dadurch gekennzeichnet,
daß eine Vorderplatte (22) jedes Riegels ausgelegt ist, in der entsprechenden Fensteröffnung (10) eines Fensters (15) aufgenommen zu werden und sich darin hin- und herzubewegen.

5. Vorrichtung nach Anspruch 3 oder 4,
dadurch gekennzeichnet,
daß die Halte- und Führungsspitzen (171-173, 181-184) längs der unteren (17) und oberen (18) Ränder der Fensteröffnung vorgesehen sind.

6. Vorrichtung nach Anspruch 5,
dadurch gekennzeichnet,
daß außerdem ein flexibler Haken (170, 180) in einem mittleren Teil jedes der Fensteröffnungsränder (17, 18) vorgesehen ist.

7. Vorrichtung nach Anspruch 1,
gekennzeichnet durch das Vorhandensein von Blockierungsmitteln zur Regelung der Klammerposition.

8. Vorrichtung nach Anspruch 7,
dadurch gekennzeichnet,
daß die Blockierungsmittel ausgelegt sind, durch den Verriegelungskamm betätigt zu werden.

9. Vorrichtung nach Anspruch 8,
dadurch gekennzeichnet,
daß die Blockierungsmittel komplemetäre Verzahnungen (19, 29) umfassen, die auf der Unterseite der Fensteröffnung und auf der Innenfläche der Riegelplatte vorgesehen sind.

10. Vorrichtung nach einem der vorhergehend Ansprüche, dadurch gekennzeichnet,
daß der Kamm eine Abdeckung umfaßt.

11. Vorrichtung nach einem der Ansprüche 2 bis 10, dadurch gekennzeichnet,
daß der jedem Riegel zugeordnete Kamm eine Anzahl von Spitzen umfaßt, die der Anzahl von Klammern dieses Riegels entspricht.

12. Vorrichtung nach einem der vorhergehenden Ansprüche, gekennzeichnet durch
ein Kammverriegelungsmittel, das ausgelegt ist, einzugreifen, wenn die Kammspitzen in den Klammern in Eingriff gelangen.

13. Vorrichtung nach Anspruch 12,
dadurch gekennzeichnet,
daß das Kammverriegelungsmittel eine Einhakraste (36) umfaßt, die dazu bestimmt ist, mit der Perforation zusammenzuwirken.

14. Vorrichtung nach Anspruch 13,
gekennzeichnet durch einen Freischnitt in der Form eines Keils (37) der Kammrückwand.

15. Vorrichtung nach Anspruch 9,
dadurch gekennzeichnet,
daß die Riegelplatte außerdem mit Führungslamellen (25) gegenüber jeder Klammer ausgerüstet ist.

16. Vorrichtung nach Anspruch 5 und 4,
dadurch gekennzeichnet,
daß die Anschläge (22a, 22b) längs der oberen und unteren Ränder der Riegelplatte vorgesehen sind.

17. Vorrichtung nach einem der vorhergehenden Ansprüche,
dadurch gekennzeichnet,
daß die Lasche ein Rechteckprofil aufweist.

18. Vorrichtung nach einem der Ansprüche 1 bis 16,
dadurch gekennzeichnet,
daß die Lasche ein im allgemeinen flaches Profil aufweist.

19. Vorrichtung nach einem der vorhergehenden Ansprüche,
gekennzeichnet durch das Vorsehen eines Gelenkmittels (103) in dem zentralen Bereich der Lasche.

20. Vorrichtung nach einem der Ansprüche 2 bis 19,
gekennzeichnet durch einen Riegel, der mit Klammern gegenüber der Vielzahl von Perforationslinien des Kabelkanals ausgerüstet ist.

## Claims

1. A device for butt joining cable trunking portions (C and C') of the type comprising a joining plate (10) carrying in facing relationship to at least one line of perforations of said portions an aligned array of projecting loops (21, 21') adapted to engage into at least two perforations of each portion and a toothed comb member (30) for locking the joining plate by engagement of teeth (33, 33') into the loops which are thus engaged, characterised by the existence within the joining plate of means for regulating the position of the loops.

2. A device according to claim 1 characterised in that the regulating means comprise:
- a joining plate (10) having on respective sides of a central zone (13) a continuous slot (15) extending in facing relationship to a line of perforations, and
- at least one latch (20) associated with each of the slots with at least two projecting loops (21) and capable of sliding in said slot.

3. A device according to claim 2 characterised in that the continuous slot (15) constitutes an elongate window at the bottom of a recess (16) provided in the thickness of the upright portion (12) of a joining plate.

4. A device according to claim 3 characterised in that a front plate portion (22) of each latch is adapted to engage into and slide in the recess (10) of a corresponding window (15).

5. A device according to claim 3 or claim 4 characterised in that retaining and guide teeth (171-173, 181-184) are provided along the lower and upper edges (17, 18) of the recess.

6. A device according to claim 5 characterised in that there is further provided a flexible catch (170, 180) in a central part of each of the recess edges (17, 18).

7. A device according to claim 1 characterised by the existence of means for locking the regulation of the position of the loops.

8. A device according to claim 7 characterised in that the locking means are adapted to be actuated by the locking toothed comb member.

9. A device according to claim 8 characterised in that the locking means comprise complementary tooth arrangements (19, 29) provided at the bottom of the recess and on the internal face of the plate portion of the latch.

10. A device according to any one of the preceding claims characterised in that the toothed comb member comprises a cap.

11. A device according to any one of claims 2 to 10 characterised in that the toothed comb member associated with each latch comprises a number of teeth corresponding to the number of loops of said latch.

12. A device according to any one of the preceding claims characterised by a means for locking the toothed comb member which is adapted to come into operation when the teeth of the toothed comb member are engaged into the loops.

13. A device according to claim 12 characterised in that the means for locking the toothed comb member comprises a latching catch (36) intended to co-operate with the perforation.

14. A device according to claim 13 characterised by a wedge-shaped recess (37) in the dorsal wall of the toothed comb member.

15. A device according to claim 9 characterised in that the plate portion of the latch is also provided with guide tongues (25) opposite each loop.

16. A device according to claim 5 and claim 4 characterised in that grooves (22a, 22b) are provided along the upper and lower edges of the plate portion of the latch.

17. A device according to any one of the preceding claims characterised in that the joining plate is of a right-angled profile.

18. A device according to any one of claims 1 to 16 characterised in that the joining plate is of a generally flat profile.

19. A device according to any one of the preceding claims characterised by the provision in the central zone of the joining plate of a pivoting means (103).

20. A device according to any one of claims 2 to 19 characterised by a latch provided with aligned loops in opposite relationship to a plurality of lines of perforations of the cable trunking.
